# EUROPEAN PATENT APPLICATION

(11) **EP 3 462 219 A1**
(43) Date of publication of application: **03.04.2019**
(21) Application number: 17193748.5
(22) Date of filing: 28.09.2017
(51) Int. Cl.: G02B 5/08, F21V 7/00, G02F 1/01, G02F 1/1335, F21V 8/00

(54) **DISPLAY DEVICE**

(71) Applicant: Vestel Elektronik Sanayi ve Ticaret A.S., 45030 Manisa (TR)
(72) Inventor: YILDIZ, Kadir, 45030 Manisa (TR); ER, Alper Sait, 45030 Manisa (TR)
(74) Representative: Flint, Adam

(57) **Abstract**

There is provided a display device for displaying images to be viewed by a viewer. The display devices comprises a plurality of light sources (20) for generating light to be viewed by a viewer. The display device also comprises at least one optical element (21) configured to receive light from at least two of the light sources (20A, 20B) and to direct the received light from a region located between the two light sources (20A, 20B) for viewing by a viewer. The optical element (21) outputs light in a manner that would be expected if another light source (20) were located at the location of the optical element (21).

## Description

### Technical Field

The present disclosure relates to a display device.

### Background

Display devices typically employ an arrangement of light sources for providing light to generate an image. Generally, there are limitations on the number of light sources that can be used to generate the image. As a result of this, there tend to be gaps between the individual light sources. These gaps become more noticeable as the viewing distance of the displayed image decreases. For example, the gaps may manifest as dark pixels between the pixels of the displayed image. This reduces the overall quality of the displayed image as the viewer views the image from a closer distance. One solution to this problem would be to fill the gaps between the light sources with additional light sources. However, using a greater number of light sources leads to a higher power consumption and can lead to excessive heat generation for the display device.

### Summary

According to a first aspect disclosed herein, there is provided a display device for displaying images to be viewed by a viewer, the display device comprising: a plurality of light sources for generating light to be viewed by a viewer; and at least one optical element configured to receive light from at least two of the light sources and to direct the received light from a region located between the two light sources for viewing by a viewer.

In an example, the optical element is located between the at least two light sources.

In an example, the display device comprises plural optical elements, each optical element being configured to receive light from respective sets of at least two of the light sources and to direct the received light from a region located between the two light sources for viewing by a viewer.

In an example, the optical element comprises a plurality of mirrors arranged to guide the light received from the at least two light sources to the region located between the at least two light sources, thereby combining the light received from the at least two light sources, and to direct the combined light out of the region for viewing by the viewer.

In an example, the plurality of mirrors comprise planar or curved mirrors or a combination thereof.

In an example, the plurality of light sources form a backlight for illuminating a display screen of the display device.

In an example, the plurality of light sources comprise light-emitting diodes (LEDs).

In an example, the plurality of light sources are operable to generate the pixels of an image.

In an example, the plurality of light sources comprise organic light-emitting diodes (OLEDs).

### Brief Description of the Drawings

To assist understanding of the present disclosure and to show how embodiments may be put into effect, reference is made by way of example to the accompanying drawings in which:
Figure 1A shows schematically a side view of an example of a display device having a direct-lit backlight;
Figure 1B shows schematically a side view of an example of a display device having a plurality of light sources for generating the pixels of an image;
Figure 2 shows schematically an example of two light sources with an associated optical element for outputting light; and
Figure 3 shows schematically an example of use of a plurality of mirrors arranged to direct light out of an optical element, such that the optical element outputs light as if a light source were located at the location of the optical element.

### Detailed Description

Display devices are used in many different types of consumer apparatus including for example television screens or monitors, computer displays or monitors, and displays for other computing devices, including smartphones, tablet computers, laptop computers, etc. Display devices are also used in many public environments in so-called "signage", for example, for displaying adverts or for information or entertainment that is of interest to a larger audience.

Conventionally, display devices employ a number of light sources for providing light to generate an image. Each light source may correspond to an individual pixel of the image. For example, the light source may be part of a backlight unit and may be used to illuminate a corresponding cell of a liquid crystal layer. Alternatively, the light source itself may generate the pixel of the image directly. For example, the light source may be an organic light-emitting diode (OLED) and may be used as part of an OLED display device (described below).

The number of pixels of an image and the spacing between them will determine, at least in part, the quality of the image that can be displayed, with a greater number of pixels enabling a higher resolution image to be generated. Moreover, the spacing between the individual pixels will generally become more visible as the viewing distance of the displayed image decreases. Accordingly, it is in general preferred to have a larger number of pixels. This in turn requires a correspondingly larger number of light sources (whether they are light sources in a backlight unit or are light sources that generate the image directly). However, increasing the number of light sources typically leads at least to increased operating temperatures and increased power consumption, which is undesirable. Hence, there is a trade-off between the power that is consumed by the display device and heat generated during operation on the one hand and the minimum viewing distance that can be achieved when displaying an image of an acceptable quality on the other hand when determining how many pixels/sources should be present.

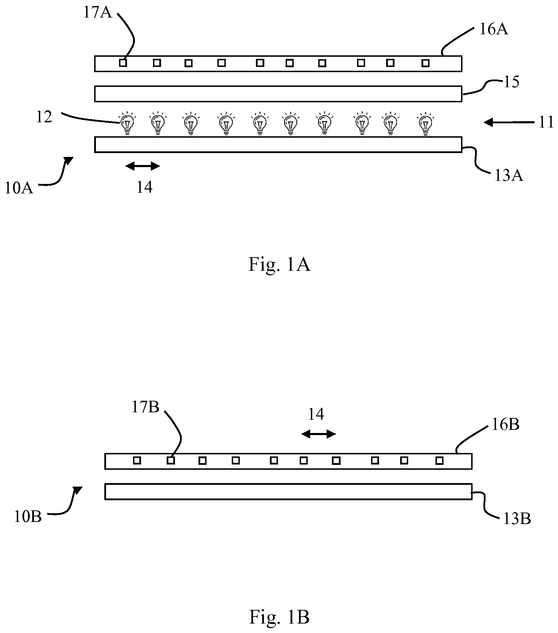

Figure 1A shows schematically a side view of a display device 10A having a direct-lit backlight 11. As is known, the direct-lit backlight 11 has plural light sources 12 for emitting light. The light sources 12 may be for example LEDs (light emitting diodes). The light sources 12 are arranged typically in a regular array on a reflector panel 13A. The distance between the centre of two neighbouring light sources is referred to as the 'pixel pitch' 14 and determines the minimum viewing distance for a displayed image. The light sources 12 emit light which is directed through a diffuser 15 to a display panel 16A. The diffuser 15 helps to reduce glare that can otherwise occur. The display panel 16A is formed of or includes a number of display elements 17A (which are also often referred to as "pixels" as they typically correspond to pixels in the image that is displayed). The display elements 17A are controllable so as to selectively transmit or prevent light from the light sources 12 passing through the display panel 15. The display elements 17A may be for example the liquid crystal cells of a liquid crystal display (LCD) device. In a display device 10A having a direct-lit backlight 11, generally there is a light source 12 for each display element 17A.

In other examples, the light sources may effectively generate the pixels directly, i.e. the light from the light source corresponds to the light required for that pixel, and no backlight is required. Figure 1B shows schematically an example of a display device 10B that uses the light sources in this way. In Figure 1B, the display device 10B comprises at least a reflector panel 13B and a display panel 16B. The display panel 16B comprises a plurality of display elements 17B for generating the pixels of an image. However, in Figure 1B, the display elements comprise the light sources themselves. The light sources may for example generate coloured light or may generate white light which is then passed through controllable coloured filters. In examples, the light sources may be configured to generate red, green or blue light (RGB). In other examples, some of the light sources may also be configured to generate yellow light (so-called RGBY) or white light (so-called RGBW). Other arrangements are known. The light sources (and any associated colour filters) may be arranged according to any type of geometric layout, for example, a regular rectangular array. Display devices that generate the pixels directly include for example display devices that use OLEDs (organic light emitting diodes) or plasma technology. Generally the light sources will be arranged in a regular array with a pixel pitch 14 that is defined by a minimum distance between the centres of two neighbouring light sources.

In examples described herein, a display device is provided in which a plurality of light sources are used for generating light (and consequently an image) to be viewed by a viewer. An optical element is configured to receive light from at least two of the light sources and to direct the received light from a region located between the two light sources to a viewer of the display device. In this way, the optical element outputs light as if another light source were located at the location of the optical element. This effectively fills the space between light sources, which otherwise appears as a black gap between the pixels of the image. As a result, a higher quality image can be displayed with a lower minimum viewing distance before gaps are visible, without requiring additional light sources to be provided.

In the examples described herein, the optical element is completely passive and does not require the display device to consume any additional power.

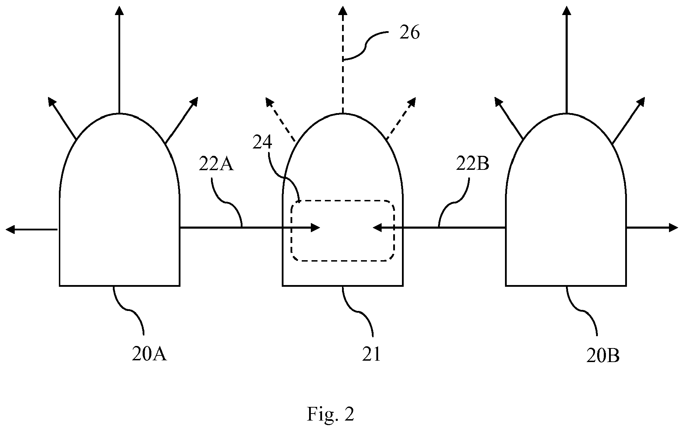

Figure 2 schematically shows a subset of light sources that are used in a display device in accordance with a first example of the present disclosure. The display device may correspond to any of the display devices described previously.

In Figure 2, a first light source 20A and a second light source 20B are shown with an optical element 21 located between the first light source 20A and the second light source 20B. The optical element 21 may be equidistant from the first and second light sources (i.e. located at half the pixel pitch). The light sources may correspond to any of the light sources described previously. Generally the light sources emit light over an angular range that is large enough for at least some of the light to be received at the optical element 21. As can be seen in Figure 2, at least a portion of the light 22A emitted from the first light source 20A and a portion of the light 22B emitted from the second light source 20B is received at the optical element 21.

The optical element 21 is configured to combine the light received from the at least two light sources and output the combined light for viewing by a viewer. A portion of the light output by the optical element 21 is shown in Figure 2 via dashed ray 26. As can be seen in the figure, the optical element 21 outputs light as if another light source were located at the location of the optical element 21. In some examples, an outer surface of the optical element 21 may have a shape that ensures that light is emitted over a limited angular range. For example, the optical element may have a bulbous or lens-like shape to direct the light as desired. It will be appreciated that, in some examples, the optical element 21 may receive and combine light from a greater number of light sources than is shown in Figure 2. For example, the optical element 21 may receive light from the light sources that are located above and below the optical element 21, as well as to the side as shown. In any case, the optical element 21 outputs light that is for viewing by a viewer, i.e. away from the panel to which the optical element 21 is attached.

The light output by the optical element 21 may be used directly or indirectly to generate an image for display. For example, the light output by the optical element 21 may be received at a corresponding display element of an LCD screen located in front of the optical element 21. Alternatively, the light output by the optical element 21 may be used more directly to generate a pixel of the displayed image. For example, the optical element 21 may be attached to the panel of an OLED display device 10B on which the OLEDs are attached.

As noted earlier, Figure 2 represents a subset of the light sources that are used to generate an image on the screen of a display device. It will be appreciated that the display device will use a plurality of light sources for generating or illuminating the image. In some examples, the display device uses a plurality of optical elements 21 for receiving the light emitted by the light sources. For example, there may be an optical element 21 associated with each adjacent pair of light sources in the horizontal and / or vertical directions. In other examples, a majority of adjacent pairs of light sources may be associated with an optical element 21. In yet other examples there may be at least some adjacent light sources that are associated with an optical element 21. In some examples, the optical elements 21 may be distributed uniformly amongst the plurality of light sources. In other examples, the optical elements 21 may be distributed non-uniformly amongst the plurality of light sources.

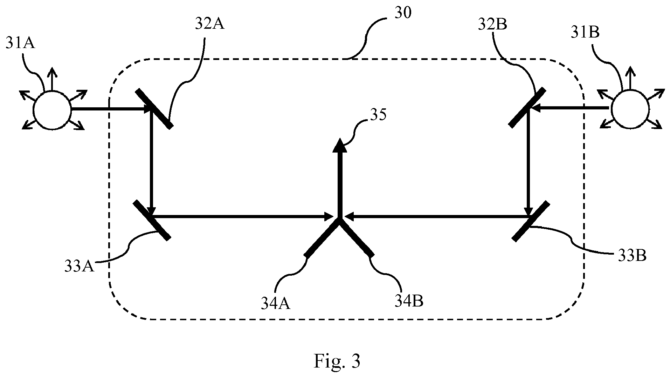

Figure 3 schematically shows a subset of light sources that are used in a display device in accordance with a second example of the present disclosure. The display device may correspond to any of the display devices described previously.

The example of Figure 3 has an optical element in the form of a mirror system 30 for combining and directing light from at least two light sources 31A, 31B. In particular, in the example of Figure 3, the mirror system 30 comprises a plurality of mirrors for guiding the light received from at least two neighbouring light sources 31A, 31B to a central region of the mirror system 30 (which may form for example a cavity). In the example shown in Figure 3, the mirrors are located between the at least two light sources 31A, 31B.

In the example shown in Figure 3, a first set of mirrors 32A, 32B are arranged to receive light from the at least two adjacent light sources 31A, 31B. As can be seen in Figure 3, the first set of mirrors 32A, 32B are substantially in the same plane as the at least two light sources 31A, 31B. Each mirror 32A, 32B in the first set is configured to receive light from a different respective light source 31A, 31B. The light received at the first set of mirrors 32A, 32B is reflected to a second set of mirrors 33A, 33B. The second set of mirrors 33A, 33B are substantially in the same plane as one another, but are located behind the first set of mirrors 32A, 32B (i.e. further from a viewer of the display device). Each mirror 33A, 33B in the second set is arranged to receive light from a corresponding mirror 32A, 32B in the first. The second set of mirrors 33A, 33B are arranged to direct light to a third set of mirrors 34A, 34B located in a central region of the mirror system 30. The third set of mirrors 34A, 34B may be located halfway between the second set of mirrors 33A, 33B, for example. The third set of mirrors 34A, 34B may be joined at an acute angle, such that the mirrors 34A, 34B form an inverted 'V' shape. In the example shown in Figure 3, the third set of mirrors 34A, 34B are substantially in the same plane as the second set of mirrors 33A, 33B. Each mirror 34A, 34B in the third set of mirrors is arranged to receive light from a corresponding mirror 33A, 33B in the second set of mirrors.

As can be seen in the Figure, the third set of mirrors 34A, 34B are arranged to receive the light reflected by the second set of mirrors 33A, 33B, and to output a combination of the received light for viewing by a viewer. In Figure 3, the light output by the mirror system 30 is indicated with arrow 35. The third set of mirrors 34A, 34B are arranged to direct light out of the mirror system 30. For example, light may be output in a direction that is normal to the plane defined by the back panel of the display device. In some examples, the third set of mirrors 34A, 34B may be joined and located such that the light output by the mirror system 30 appears to originate from a single point. In other examples, the third set of mirrors 34A, 34B may be arranged such that light appears to originate from multiple different points. For example, there may be a gap between the individual mirrors 34A, 34B that make up the third set of mirrors.

The light output by the mirror system 30 results in a smooth transition in brightness between the at least two light sources 31. This in turn allows a user to view the image from a closer distance, with the gaps between the light sources appearing less noticeable (if at all). In some examples, the light emitted from the mirror system 30 may result in a mixing of the colours of the pixels that are associated with the at least two adjacent light sources 31. However, this will have a negligible effect on the quality of the displayed image. For most regions of an image (i.e. non-edge regions), it is expected that neighbouring pixels will on average be of the same or a very similar colour, and so any mixing of colours is likely to go unnoticed by a viewer.

It will be appreciated that whilst six mirrors are shown in Figure 3, the same effect may be achieved with a different number of mirrors. Generally, each mirror in the first set of mirrors is angled with respect to its associated light source such that light is reflected to a further set of mirrors. The further set of mirrors are then arranged to direct light to a central set of mirrors within the mirror system. The central set of mirrors are angled such that light is directed out of the mirror system 30, as described above.

While the mirrors shown in Figure 3 are of a planar shape, it will be appreciated that the same effect may be achieved using curved mirrors or a combination of planar and curved mirrors. For example, curved mirrors may allow the reflected light to be confined to a smaller angular range, thereby ensuring that a greater portion of light is directed to the gap region, and not to regions that are already receiving sufficient illumination from the at least two light sources. In some examples, the light reflected from at least one mirror may be passed through a lens before being received at another mirror, or being directed out of the mirror system 30 21.

The mirrors shown in Figure 3 will be made of a material that has a high reflectivity in the visible light spectrum. For example, the mirrors may be made of a metal such as aluminium, silver, gold, etc. In some examples, the mirrors may be made of an alloy that includes at least two of these metals. Generally, the mirrors will be made of a material that enables a large portion of the light received at the mirror to be reflected, be that to another mirror within the mirror system 30 or out of the mirror system 30.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A display device for displaying images to be viewed by a viewer, the display device comprising:
a plurality of light sources for generating light to be viewed by a viewer; and
at least one optical element configured to receive light from at least two of the light sources and to direct the received light from a region located between the two light sources for viewing by a viewer.

2. A display device according to claim 1, wherein the optical element is located between the at least two light sources.

3. A display device according to claim 1 or claim 2, comprising plural optical elements, each optical element being configured to receive light from respective sets of at least two of the light sources and to direct the received light from a region located between the two light sources for viewing by a viewer.

4. A display device according to any of claims 1 to 3, wherein the optical element comprises a plurality of mirrors arranged to guide the light received from the at least two light sources to the region located between the at least two light sources, thereby combining the light received from the at least two light sources, and to direct the combined light out of the region for viewing by the viewer.

5. A display device according to claim 4, wherein the plurality of mirrors comprise planar or curved mirrors or a combination thereof.

6. A display device according to any of claims 1 to 5, wherein the plurality of light sources (form a backlight for illuminating a display screen of the display device.

7. A display device according to claim 6, wherein the plurality of light sources comprise light-emitting diodes (LEDs).

8. A display device according to any of claims 1 to 5, wherein the plurality of light sources are operable to generate the pixels of an image.

9. A display device according to claim 8, wherein the plurality of light sources comprise organic light-emitting diodes (OLEDs).
